# EUROPEAN PATENT SPECIFICATION

(11) **EP 2 200 225 B1**
(45) Date of publication and mention of the grant of the patent: **12.10.2011**
(21) Application number: 08021349.9
(22) Date of filing: 09.12.2008
(51) Int. Cl.: H04L 12/46, H04L 29/06, H04L 12/56

(54) **Method of handling a signalling and management communication traffic**
Verfahren zur Handhabung der Signalgebung und des Verwaltungskommunikationsverkehrs
Procédé de gestion d'un trafic de communication de gestion et de signalisation

(43) Date of publication of application: 23.06.2010
(73) Proprietor: Alcatel Lucent, 75008 Paris (FR)
(72) Inventor: Thomas, Wolfgang, 90409 Nürnberg (DE); Naumann, Ronald, 90452 Eckental (DE)
(74) Representative: Schmidt, Werner Karl

(56) References cited:
- US-A1- 2004 252 717
- US-B1- 6 400 729
- US-B1- 6 587 476
- US-B1- 6 697 872

## Description

The present invention relates to a method of handling a signalling and management communication traffic, and a corresponding network element to execute said method.

With the steady capacity increase of transmission systems, in particular optical transmission systems, the bandwidth requirements for the signalling and management communication traffic of these systems increase steadily, too.

Current transmission systems use standard CPUs for processing the signalling and management communication traffic in their DCN (CPU = Central Processing Unit; DCN = Data Communication Network).

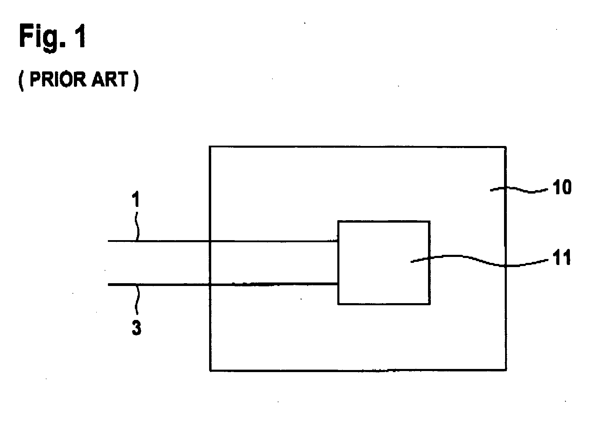

Fig. 1 shows how a signalling and management communication traffic is handled according to the prior art. A network element 10 of a transmission system comprises a standard CPU 11 which is adapted to exchange signalling and management communication traffic with other network devices through an ECC link 1 and a management link 3 (ECC = embedded control channel). ECCs are data communication channels which are especially reserved for the transportation of signalling and management data.

The ECC link 1 is a link between the network element 10 and other network devices of the transmission system whereby the ECC link 1 comprises one or more ECCs. The management link 3 is a link between the network element 10 and other network devices of the transmission system whereby the link is used for the transportation of management data to/from a management network, e.g. a management LAN (LAN = Local Area Network).

The CPU 11 receives signalling and management communication traffic associated with one or more first embedded control channels via the ECC link 1. The CPU 11 is in charge of forwarding that part of the received signalling and management communication traffic which needs to be relayed to other network elements of the transmission system back to one or more second embedded control channels on the ECC link 1, forwarding that part of the received signalling and management communication traffic that needs to be sent to a management network of the transmission system to the management link 3, and processing that part of the received signalling and management communication traffic that is targeted at the network element 10. The aforementioned one or more first ECCs and the one or more second ECCs are different channels within the ECC link 1.

In case of excessive traffic load, the CPU 11 will drop packets of the signalling and management communication traffic, resulting in a need for retransmissions. As a consequence, the overall communication slows down, e.g. the time required to manage the network element 10 (e.g. to distribute new software, to give a management command, or to upload performance data to the network element 10) increases.

The published US patent US6697872 B1 discloses a router to interconnect two different networks, e.g. an Ethernet LAN and a WAN using HDLC, wherein an incoming packet encoded in a first protocol is received from a first network, converted into a second, different protocol at the router and sent onto a second network under the second protocol. Next generation network elements have such a huge bandwidth demand that a standard CPU is not able to handle the amount of data associated with the respective signalling and management communication traffic. For example, the capacity of next generation terabit switches typically increases by a factor of four (at least), while the processing power of the available CPUs does not scale by this factor but typically by a much lower factor. If the required DCN bandwidth increases more than the available DCN processing power, the DCN will not only slow down but stop working. This may lead to service unavailability.

Commercially available network processors are capable to handle this amount of bandwidth, but are too expensive to be used since their offered functionality is larger than the needed forwarding feature.

Thus, today's problem is that the use of CPUs for DCN processing is limited and next generation terabit network elements will cross this limit requiring a more powerful but still affordable solution.

It is the object of the present invention to provide an improved handling of a signalling and management communication traffic in a network element of a transmission system.

The object of the present invention is achieved by a method of handling a signalling and management communication traffic in a network element, in particular an optical cross-connect, of a transmission system whereby the signalling and management communication traffic is transmitted between network elements of the transmission system in embedded communication channels by means of a HDLC-framed point-to-point protocol, the method comprising the steps of receiving, at said network element, the signalling and management communication traffic on one or more first embedded communication channels via one or more embedded communication channel interfaces, trans-coding the received signalling and management communication traffic by stripping a data payload from frames according to a HDLC-framed point-to-point protocol and inserting the stripped data payload into Ethernet frames, and routing the trans-coded signalling and management communication traffic by means of an Ethernet-based routing unit (HDLC = High Level Data Link Control). The object of the present invention is further achieved by a network element, preferably an optical cross-connect, of a transmission system wherein a signalling and management communication traffic is transmitted between network elements of the transmission system in embedded communication channels by means of a HDLC-framed point-to-point protocol, the network element comprising one or more HDLC termination and Ethernet trans-coding units adapted to receive the signalling and management communication traffic on one or more first embedded communication channels via one or more embedded communication channel interfaces and trans-code the received signalling and management communication traffic by stripping a data payload from frames according to a HDLC-framed point-to-point protocol and inserting the stripped data payload into Ethernet frames, and one or more Ethernet-based routing units adapted to route the trans-coded signalling and management communication traffic.

The signalling and management communication traffic is comprised of IP packets (IP = Internet Protocol). The term "Ethernet frames" refers to frames according to an Ethernet standard.

The present invention solves the dilemma that standard CPUs are not powerful enough and network processor devices are too expensive. The present invention makes it possible to use cheap IP-over-Ethernet-switch devices for the handling of signalling and management communication traffic. Thus, the present invention provides a powerful but still affordable way of handling the signalling and management communication traffic in a network element of a transmission system.

The present invention is also applicable to optical transmission systems which do not use Ethernet but a point-to-point protocol (= PPP) as "layer two" transmission for their embedded communication channels. A basic idea of the present invention is to use a simple conversion between PPP and Ethernet, so that IP traffic being sent or received over PPP can internally, i.e., within the network element, be processed by commercially available as well as cheap IP-over-Ethernet-switch devices which require Ethernet as "layer two" protocol.

The present invention provides the technical effect to significantly off-load a processing unit, e.g., a CPU or a DCN CPU (= a CPU assigned to process DCN related data), of the network element. The present invention splits the task of which a CPU of a network element according to prior art is in charge into different parts which can be handled by different units. Therefore, the CPU of the network element is significantly off-loaded.

The solution provides the DCN bandwidth required by next generation terabit network elements at a very low cost.

Further advantages are achieved by the embodiments of the invention indicated by the dependent claims.

According to a preferred embodiment of the invention, said Ethernet-based routing unit routes the trans-coded signalling and management communication traffic based on one or more IP addresses contained in the data payload. The data payload which is stripped, i.e., extracted, from a frame according to the HDLC-framed point-to-point protocol (alternatively referred to as: "HDLC frame") and inserted into an Ethernet frame (alternatively referred to as: "Ethernet type frame" or "frame according to an Ethernet standard") comprises a field containing one IP address, i.e., a destination address. The Ethernet-based routing unit reads the said IP address and routes the corresponding Ethernet frame containing the data payload with the said IP address according to the said IP address and, if the data contained in the trans-coded signalling and management communication traffic is targeted at one or more second embedded communication channels, the network element, preferably the Ethernet-based routing unit, routes the trans-coded signalling and management communication traffic to the one or more second embedded communication channels and the network element, preferably the HDLC termination and Ethernet trans-coding unit, trans-codes the trans-coded signalling and management communication traffic from the Ethernet type frame back to the HDLC-framed point-to-point protocol.

Preferably, the one or more first ECCs and the one or more second ECCs are different channels.

Preferably, the network element, preferably the Ethernet-based routing unit, routes the trans-coded signalling and management communication traffic which is targeted at a management network to a management link associated with the management network. The management link provides a connection between the network element and the management network. The trans-coded signalling and management communication traffic which is targeted at the management network is transmitted via the management link to said management network.

Preferably, the network element, preferably the Ethernet-based routing unit, routes the trans-coded signalling and management communication traffic which is targeted at said network element to a processing unit of said network element.

According to another preferred embodiment of the invention, when trans-coding the received signalling and management communication traffic, the one or more HDLC termination and Ethernet trans-coding units assign an embedded communication channel identifier to a VLAN tag of the Ethernet type frame whereby the embedded communication channel identifier identifies an embedded communication channel with which the data payload inserted into the Ethernet type frame is associated (VLAN = Virtual Local Area Network). The signalling and management communication traffic arriving at the network element may be associated with two or more different ECCs, e.g. transmitted on two or more different ECCs. In order to enable a future association between a data payload of the signalling and management communication traffic and one of the two or more different ECCs, an ECC ID (= identifier) which identifies the ECC with which the data payload is associated is written to the VLAN tag (VLAN field) of the Ethernet frame.

It may be possible that a first HDLC frame comprising a first data payload received at the one or more HDLC termination and Ethernet trans-coding units is associated with a first ECC, e.g. transmitted on the first ECC. It may also be possible that a second HDLC frame comprising a second data payload received at the one or more HDLC termination and Ethernet trans-coding units is associated with a second ECC, e.g. transmitted on the second ECC. The information about an association between the first/second data payload and the first/second ECC is maintained by means of corresponding ECC IDs which are written to a first/second Ethernet frame containing the first/second data payload.

In a preferred embodiment, the one or more HDLC termination and Ethernet trans-coding units insert the stripped data payload into the Ethernet frames after removing the HDLC zero-bits inserted in the data payload according to the HDLC-framed point-to-point protocol.

According to another preferred embodiment of the invention, the network element further comprises a processing unit, e.g. a DCN CPU, adapted to receive the trans-coded signalling and management communication traffic which is targeted at said network element from the one or more Ethernet-based routing units, and process the received trans-coded signalling and management communication traffic.

Preferably, the one or more Ethernet-based routing units comprise one or more IP routers adapted to route the trans-coded signalling and management communication traffic based on one or more IP addresses contained in the data payload, and one or more Ethernet switches adapted to exchange the trans-coded signalling and management communication traffic with the one or more HDLC termination and Ethernet trans-coding units.

Preferably, the one or more HDLC termination and Ethernet trans-coding units are adapted to multiplex the signalling and management communication traffic received on the one or more first embedded communication channels on a link between the one or more HDLC termination and Ethernet trans-coding units and the one or more Ethernet-based routing units. Preferably, the one or more HDLC termination and Ethernet trans-coding units are adapted to de-multiplex the signalling and management communication traffic received from the one or more Ethernet-based routing units to one or more second embedded communication channels, i.e., de-multiplex the traffic and distribute the traffic to the one or more second embedded communication channels.

In a preferred embodiment, the one or more HDLC termination and Ethernet trans-coding units are implemented in one or more field-programmable gate arrays (= FPGAs).

In a preferred embodiment, the one or more HDLC termination and Ethernet trans-coding units are adapted to trans-code the trans-coded signalling and management communication traffic from the Ethernet type frame back to the HDLC-framed point-to-point protocol by stripping the data payload from the Ethernet frames and inserting the stripped data payload into frames according to the HDLC-framed point-to-point protocol. Further it is preferred that the one or more HDLC termination and Ethernet trans-coding units are adapted to send the back-trans-coded signalling and management communication traffic on one or more second embedded communication channels. The one or more HDLC termination and Ethernet trans-coding units are able to trans-code in both directions, i.e., provide the network element with a bi-directional trans-coding capability.

These as well as further features and advantages of the invention will be better appreciated by reading the following detailed description of presently preferred exemplary embodiments taken in conjunction with accompanying drawings of which:
- Fig. 2: is a block diagram showing a trans-coding according to an embodiment of the invention;
- Fig. 3: is a block diagram of a network element according to an embodiment of the invention; and
- Fig. 4: is a block diagram of a transmission network comprising a network element according to an embodiment of the invention;
- Fig. 5: is a block diagram of a network element according to a further embodiment of the invention;
- Fig. 6: is a block diagram of a network element according to a further embodiment of the invention; and
- Fig. 7: is a block diagram of a network element according to a further embodiment of the invention.

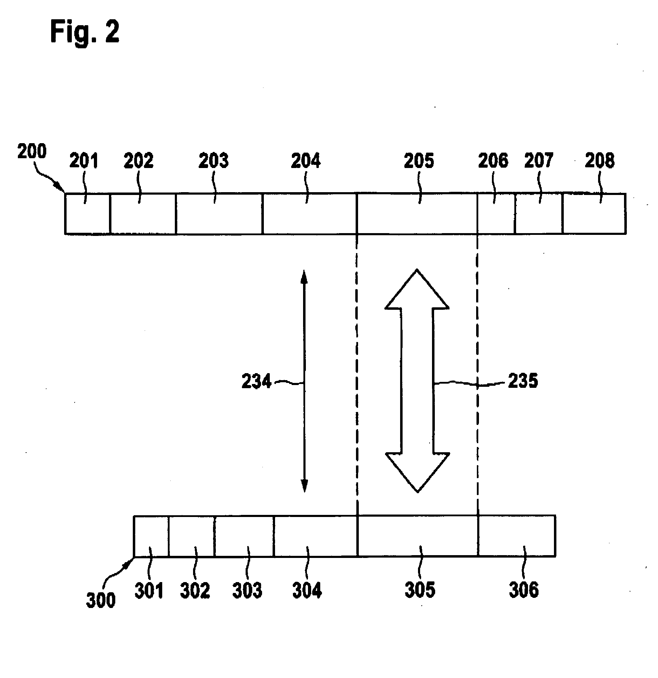

Fig. 2 shows a trans-coding of an IP-based data payload comprising signalling and management communication traffic from a HDLC-framed PPP carrying IP to a standard IP-over-Ethernet PDU (= Protocol Data Unit).

A frame 200 according to a HDLC-framed point-to-point protocol comprises a head flag sequence 201, an address field 202, a control field 203, a protocol field 204, a data payload 205, a padding field 206, a FCS 207, and a tail flag sequence 208 (FCS = Frame Check Sequence). The address field 202, the control field 203, the protocol field 204, the data payload 205, and the padding field 206 are encoded by inserting a zero-bit after any sequence of five consecutive ones.

A HDLC termination and Ethernet trans-coding unit removes the HDLC zero-bits ("stuffing bits") from the HDLC frame 200, strips (extracts) the data payload 205 from the HDLC frame 200, and inserts the stripped data payload into a data payload field 305 of an Ethernet frame 300. Fig. 2 shows the trans-coding step 235. The Ethernet frame 300 comprises a destination address 301, a source address 302, a VLAN tag 303, a type field 304, said data payload 305, and a FCS 306. The destination address 301, the source address 302, the VLAN tag 303, and the type field 304 represent an IP header of the Ethernet frame 300.

An ECC ID is written to the VLAN tag 303. The content of the protocol field 204 of the HDLC frame 200, i.e., the IP type indication, is replaced by a corresponding protocol indicator according to Ethernet (EtherType) and written 234 to the type field 304 (EtherType) of the Ethernet frame 300.

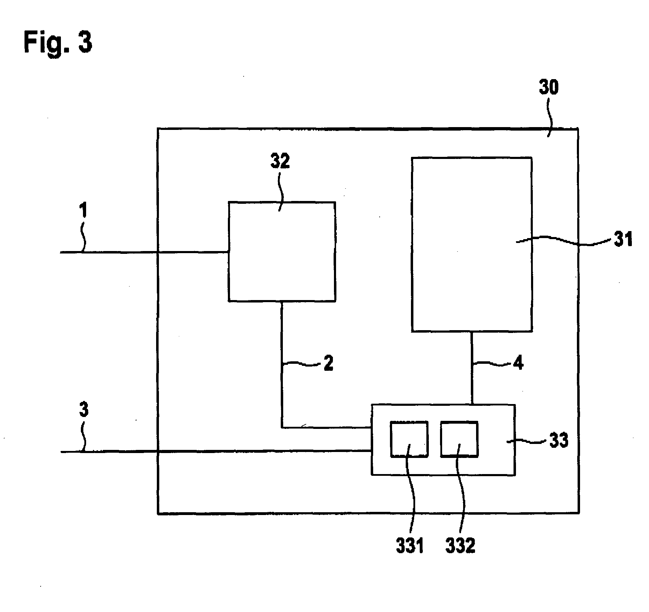

Fig. 3 shows an embodiment of the network element 30 according to the present invention. The network element 30 comprises a DCN CPU 31, a HDLC termination and Ethernet trans-coding unit 32, and an Ethernet-based routing unit 33. The DCN CPU 31 may be any standard CPU such as used in prior art network elements, too.

The HDLC termination and Ethernet trans-coding unit 32 may be implemented in one or more field-programmable gate arrays. The HDLC termination and Ethernet trans-coding unit 32 comprises an interface for receiving signalling and management communication traffic which is received via an ECC link 1. The ECC link 1 transmits the signalling and management communication traffic on one or more ECCs to the network element 30. The signalling and management communication traffic is transported in HDLC frames. The HDLC termination and Ethernet trans-coding unit 32 terminates the HDLC frames and trans-codes the data payload to frames according to the Ethernet protocol, as described above with reference to Fig. 1.

The HDLC termination and Ethernet trans-coding unit 32 transmits the trans-coded signalling and management communication traffic via an internal link 2 connecting the HDLC termination and Ethernet trans-coding unit 32 and the Ethernet-based routing unit 33 to the Ethernet-based routing unit 33. If the signalling and management communication traffic is associated with two or more different ECCs, or one ECC and at least one LAN interface, the HDLC termination and Ethernet trans-coding unit 32 assigns ECC IDs to the VLAN tags 303 of the Ethernet frames 300 and performs a multiplexing of the Ethernet frames associated with two or more different ECCs onto the internal link 2.

The Ethernet-based routing unit 33 comprises an IP router 331 and an Ethernet switch 332, preferably an IP-over-Ethernet-Switch device. The Ethernet switch 332 receives the trans-coded signalling and management communication traffic from the HDLC termination and Ethernet trans-coding unit 32 and sends trans-coded signalling and management communication traffic targeted to other ECCs from the Ethernet-based routing unit 33 to the HDLC termination and Ethernet trans-coding unit 32. That means that the internal link 2 is also a bi-directional link. Preferably, all links of the network element 30 are bi-directional links.

The IP router 331 routes the IP packets/frames representing the trans-coded signalling and management communication traffic which is received at the Ethernet-based routing unit 33 dependent on one or more IP addresses contained in the IP header of the IP packets/frames of the trans-coded signalling and management communication traffic. The IP router 331 accesses the one or more IP addresses contained in the data payload 305 of the IP packets/frames 300 and routes the respective IP packets/frames 300 accordingly.

If the IP address indicates that the IP frame 300 is targeted to another network element, the IP router 331 routes the IP frame 300 back via the internal bi-directional link 2 to the HDLC termination and Ethernet trans-coding unit 32. The HDLC termination and Ethernet trans-coding unit 32 trans-codes the received IP frame 300 back into a frame 200 according to the HDLC protocol format and sends the back-trans-coded IP frame 200 onto a different ECC according to the IP address.

If the IP address indicates that the IP frame 300 is targeted to a management network, the IP router 331 routes the IP frame 300 via the management link 3 to the management network.

If the IP address indicates that the IP frame is targeted at said network element 30, the IP router 331 routes the IP frame 300 to the processing unit 31 (= DCN PCU) of said network element 30 via an internal link 4 which connects the Ethernet-based routing unit 33 and the processing unit 31.

In case a higher capacity is needed in the network element 30, e.g., because of a high amount of ECCs, the network element 30 may comprise two or more HDLC termination and Ethernet trans-coding units 32 and two or more Ethernet-based routing units 33.

With the trans-coded signalling and management communication traffic, the traffic arriving at the HDLC termination and Ethernet trans-coding unit 32 needs not to be sent to the DCN CPU 31 if this traffic needs to be sent to other ECCs or to one or more management LANs. Only the traffic that needs to be terminated at the network element 30 will be switched to the processing unit 31. With that the processing unit 31 is drastically off-loaded.

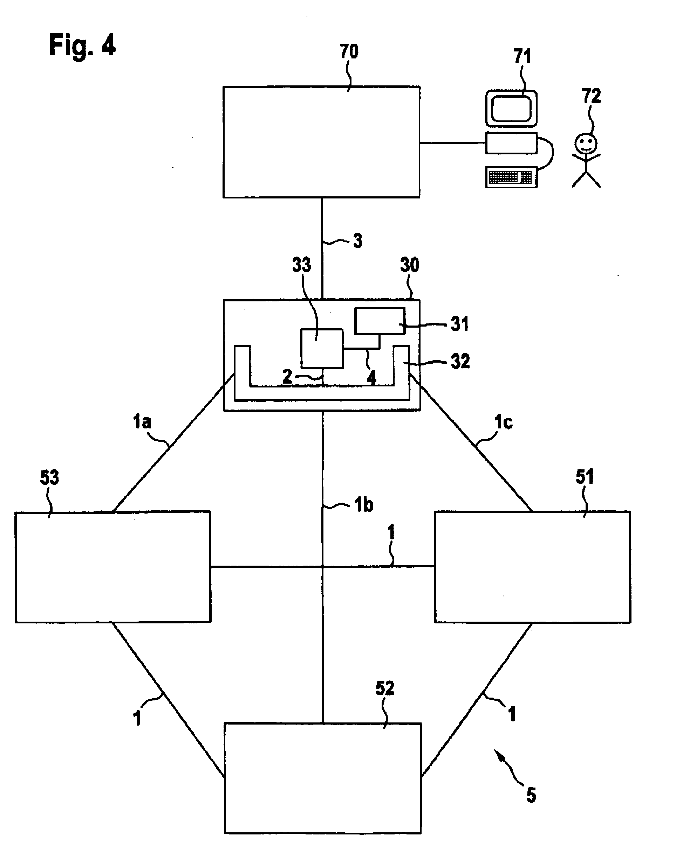

Fig. 4 gives a block diagram of a transmission network 5 comprising a first network element 30 according to an embodiment of the invention. The transmission network 5 is preferably an optical transmission network. The first network element 30 corresponds to the network element 30 which was described above with reference to Fig. 3. The only difference is that the network element 30 shown in Fig. 4 comprises a HDLC termination and Ethernet trans-coding unit 32 which is connected to three ECC links 1a, 1b, and 1c.

The transmission network 5 further comprises three other network elements, a second 51, a third 52, and a fourth network element 53, which are connected among each other via ECC links 1 and with the first network element 30 via the three ECC links 1a, 1b, and 1c.

Furthermore, the transmission network 5 comprises a management network 70, preferably a management LAN, which is supervised by a network supervisor/operator 72 via a work station 71 connected to the management network 70. The first network element 30 is connected to the management network 70 by means of the management link 3. Thus, the first network element 30 represents a gateway network element providing a gateway/connection between the management network 70 and the ECC-based network comprising the network elements 30, 51, 52, 53.

Preferably, each of the network elements 30, 51, 52, 53 is located at another location, e.g., in major cities of a country. The ECC links 1, 1a, 1b, and 1c are optical transmission links providing a high transmission bandwidth for the signalling and management communication traffic. Signalling and management communication traffic is exchanged between the network elements 30, 51, 52, 53 via the ECC links 1, 1a, 1b, and 1c.

Signalling and management communication traffic arriving at the HDLC termination and Ethernet trans-coding unit 32 is trans-coded to an Ethernet protocol and routed by the Ethernet-based routing unit 33 to one or more of the other network elements 51, 52, and 53, to the management network 70, and/or to the processing unit 31 of the first network element 30.

Examples of three different forwarding types are:
a) Traffic between the fourth network element 53 and the second network element 51 via the first network element 30 (ECC to ECC communication within the first network element 30);
b) Traffic between the fourth network element 53 and the work station 71 via the first network element 30 (ECC to LAN communication within the first network element 30); and
c) Traffic between the first network element 30 and the work station 71 (Terminated LAN communication within the first network element 30).

For instance, a CPU offload is achieved as specified by the following performance data. If all four network elements 30, 51, 52, 53 in Figure 4 have the same average amount of management communication traffic with the work station 71, then the DCN CPU within the first network element 30 is off-loaded by 75 %. If a signalling traffic between two of the network elements 30, 51, 52, 53 is (unnecessarily) routed via a third network element of the network elements 30, 51, 52, 53, then the DCN CPU in that third network element is not impacted by this traffic at all.

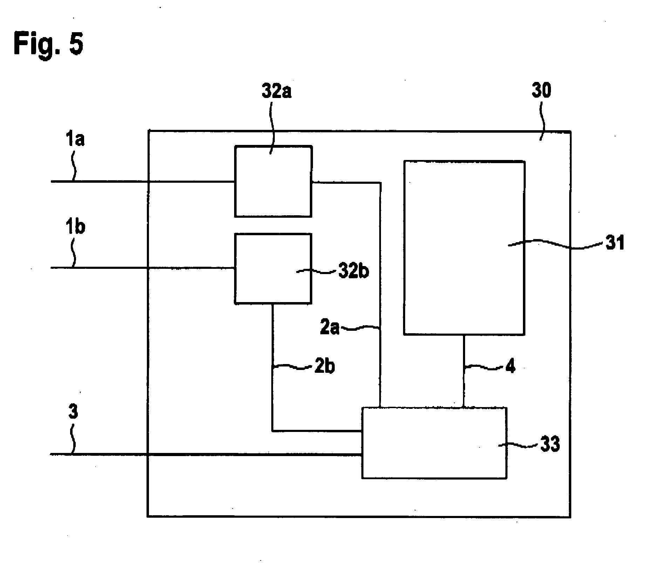

Fig. 5 shows a further embodiment of the network element 30 according to the present invention. The network element 30 comprises a DCN CPU 31, a first HDLC termination and Ethernet trans-coding unit 32a, a second HDLC termination and Ethernet trans-coding unit 32b, and an Ethernet-based routing unit 33. The first 32a and the second 32b HDLC termination and Ethernet trans-coding units each exchange signalling and management communication traffic via ECC links 1a, 1 b. The first 32a and the second 32b HDLC termination and Ethernet trans-coding units are each connected via internal links 2a, 2b with the Ethernet-based routing unit 33. The functionality of the network element 30 corresponds to the one described above.

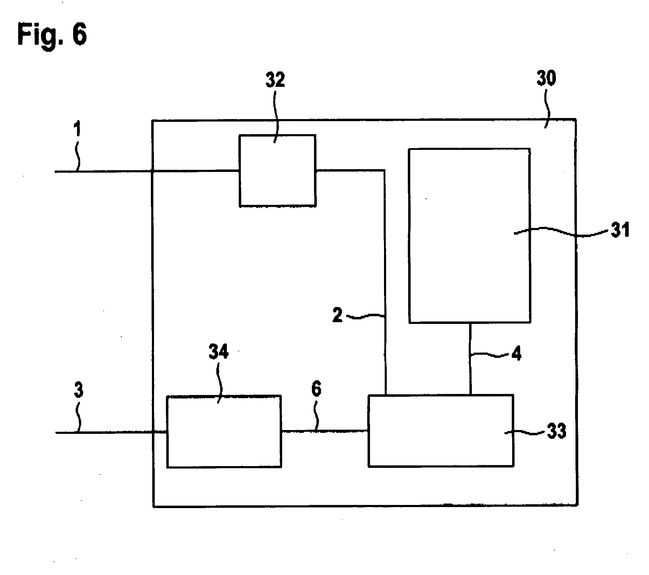

Fig. 6 shows a further embodiment of the network element 30 according to the present invention. The network element 30 comprises a DCN CPU 31, a HDLC termination and Ethernet trans-coding unit 32, an Ethernet-based routing unit 33, and a switch 34 which is connected via a management link 3 with a management network. The HDLC termination and Ethernet trans-coding unit 32 exchanges signalling and management communication traffic via an ECC link 1. The HDLC termination and Ethernet trans-coding unit 32 is connected via an internal link 2 with the Ethernet-based routing unit 33. The Ethernet-based routing unit 33 is connected via an internal link 6 with the switch 34. The functionality of the network element 30 corresponds to the one described above.

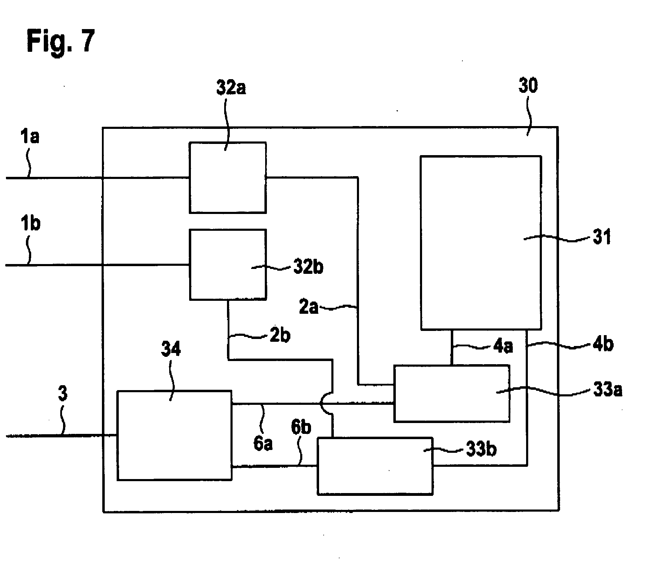

Fig. 7 shows a further embodiment of the network element 30 according to the present invention. The network element 30 comprises a DCN CPU 31, a first HDLC termination and Ethernet trans-coding unit 32a, a second HDLC termination and Ethernet trans-coding unit 32b, a first Ethernet-based routing unit 33a, a second Ethernet-based routing unit 33b, and a switch 34 which is connected via a management link 3 with a management network. The first 32a and the second 32b HDLC termination and Ethernet trans-coding units each exchange signalling and management communication traffic via ECC links 1a, 1 b. The first 32a and the second 32b HDLC termination and Ethernet trans-coding units are each connected via internal links 2a, 2b with the first Ethernet-based routing unit 33a and the second Ethernet-based routing unit 33b. The first Ethernet-based routing unit 33a and the second Ethernet-based routing unit 33b are each connected via internal links 4a, 4b with the DCN CPU 31. The first Ethernet-based routing unit 33a and the second Ethernet-based routing unit 33b are each connected via internal links 6a, 6b with the switch 34. The functionality of the network element 30 corresponds to the one described above.

## Claims

1. A method of handling a signalling and management communication traffic in a network element (30), in particular an optical cross-connect, of a transmission system (5) whereby the signalling and management communication traffic is transmitted between network elements (30, 51, 52, 53) of the transmission system (5) in embedded communication channels by means of a HDLC-framed point-to-point protocol, the method comprising the steps of:
receiving, at said network element (30), the signalling and management communication traffic on one or more first embedded communication channels via one or more embedded communication channel interfaces (32);
trans-coding the received signalling and management communication traffic by stripping a data payload (205) from frames (200) according to a HDLC-framed point-to-point protocol and inserting the stripped data payload (305) into Ethernet frames (300);
routing the trans-coded signalling and management communication traffic by means of an Ethernet-based routing unit (33);
if the data contained in the trans-coded signalling and management communication traffic is targeted at one or more second embedded communication channels, routing the trans-coded signalling and
management communication traffic to the one or more second embedded communication channels and trans-coding the trans-coded signalling and management communication traffic from the Ethernet type frame (300) back to the HDLC-framed point-to-point protocol;
routing the trans-coded signalling and management communication traffic which is targeted at a management network to a management link (3); and
routing the trans-coded signalling and management communication traffic which is targeted at said network element (20) to a processing unit (31) of said network element (30).

2. The method of claim 1,
**characterised in**
**that** the method further comprises the step of:
routing, by means of said Ethernet-based routing unit (33), the trans-coded signalling and management communication traffic based one or more IP addresses contained in the data payload (305).

3. The method of claim 1,
**characterised in**
**that** the method further comprises the step of:
when trans-coding the received signalling and management communication traffic, assigning an embedded communication channel identifier to a VLAN tag (303) of the Ethernet type frame (300) whereby the embedded communication channel identifier identifies an embedded communication channel with which the data payload (305) inserted into the Ethernet type frame (300) is associated.

4. The method of claim 1,
**characterised in**
**that** the method further comprises the step of:
inserting the stripped data payload (305) into the Ethernet frames (300) after removing the HDLC zero-bits inserted in the data payload (205) according to the HDLC-framed point-to-point protocol.

5. A network element (30), preferably an optical cross-connect, of a transmission system (5) wherein a signalling and management communication traffic is transmitted between network elements (30, 51, 52, 53) of the transmission system (5) in embedded communication channels by means of a HDLC-framed point-to-point protocol, the network element (30) comprising
one or more HDLC termination and Ethernet trans-coding units (32) adapted to receive the signalling and management communication traffic on one or more first embedded communication channels and trans-code the received signalling and management communication traffic by stripping a data payload (205) from frames (200) according to a HDLC-framed point-to-point protocol and inserting the stripped data payload (305) into Ethernet frames (300), and
one or more Ethernet-based routing units (33) adapted to route the trans-coded signalling and management communication traffic, wherein, if the data contained in the trans-coded signalling and management communication traffic is targeted at one or more second embedded communication channels, the network element (30), preferably the Ethernet-based routing unit (33), is adapted to route the trans-coded signalling and management communication traffic to the one or more second embedded communication channels and the network element (30), preferably the HDLC termination and Ethernet trans-coding unit (32), is adapted to trans-code the trans-coded signalling and management communication traffic from the Ethernet type frame (300) back to the HDLC-framed point-to-point protocol, wherein the network element (30), preferably the Ethernet-based routing unit (33), is adapted to route the trans-coded signalling and management communication traffic which is targeted at a management network to a management link (3) associated with the management network, and
wherein the network element (30), preferably the Ethernet-based routing unit (33), is adapted to route the trans-coded signalling and management communication traffic which is targeted at said network element (30) to a processing unit (31) of said network element (30).

6. The network element of claim 5,
**characterised in**
**that** the network element (30) further comprises a processing unit (31) adapted to receive the trans-coded signalling and management communication traffic which is targeted at said network element (30) from the one or more Ethernet-based routing units (33), and process the received trans-coded signalling and management communication traffic.

7. The network element of claim 5,
**characterised in**
**that** the one or more Ethernet-based routing units (33) comprise one or more IP routers (331) adapted to route the trans-coded signalling and management communication traffic based on one or more IP addresses contained in the data payload (305), and one or more Ethernet switches (332) adapted to exchange the trans-coded signalling and management communication traffic with the one or more HDLC termination and Ethernet trans-coding units (32).

8. The network element of claim 5,
**characterised in**
**that** the one or more HDLC termination and Ethernet trans-coding units (32) are adapted to multiplex the signalling and management communication traffic received on the one or more first embedded communication channels on a link (2) between the one or more HDLC termination and Ethernet trans-coding units (32) and the one or more Ethernet-based routing units (33) and de-multiplex the signalling and management communication traffic received from the one or more Ethernet-based routing units (33) to one or more second embedded communication channels.

9. The network element of claim 5,
**characterised in**
**that** the one or more HDLC termination and Ethernet trans-coding units (32) are implemented in one or more field-programmable gate arrays.

10. The network element of claim 5,
**characterised in**
**that** the one or more HDLC termination and Ethernet trans-coding units (32) are adapted to trans-code back the trans-coded signalling and management communication traffic by stripping the data payload (305) from the Ethernet frames (300) and inserting the stripped data payload (205) into frames (200) according to the HDLC-framed point-to-point protocol.

## Patentansprüche

1. Verfahren zur Handhabung eines Signalisierungs- und Verwaltungskommunikationsverkehrs in einem Netzwerkelement (30), insbesondere einem optischen Crossconnect, eines Übertragungssystems (5), wobei der Signalisierungs- und Verwaltungskommunikationsverkehr zwischen Netzwerkelementen (30, 51, 52, 53) des Übertragungssystems (5) in eingebetteten Kommunikationskanälen anhand eines Punkt-zu-Punkt-HDLC-Rahmen-Protokolls übertragen wird, wobei das Verfahren die folgenden Schritte umfasst:
Empfangen, an dem besagten Netzwerkelement (30), des Signalisierungs- und Verwaltungskommunikationsverkehrs auf einem oder mehreren ersten eingebetteten Kommunikationskanälen über eine oder mehrere eingebettete Kommunikationskanal-Schnittstellen (32);
Transcodieren des empfangenen Signalisierungs- und Verwaltungskommunikationsverkehrs durch Strippen einer Datennutzlast (205) aus Rahmen (200) gemäß einem Punkt-zu-Punkt-HDLC-Rahmen-Protokoll und Einfügen der gestrippten Datennutzlast (305) in Ethernet-Rahmen (300);
Routen des transcodierten Signalisierungs- und Verwaltungskommunikationsverkehrs anhand einer Ethernet-basierten Routing-Einheit (33);
wenn die in dem transcodierten Signalisierungs- und Verwaltungskommunikationsverkehr enthaltenen Daten an einen oder mehrere zweite eingebettete Kommunikationskanäle gerichtet sind, Routen des transcodierten Signalisierungs- und Verwaltungskommunikationsverkehrs an den einen oder die mehreren zweiten eingebetteten Kommunikationskanäle, und Rücktranscodieren des transcodierten Signalisierungs- und Verwaltungskommunikationsverkehrs von dem Rahmen vom Typ Ethernet (300) in das Punkt-zu-Punkt-HDLC-Rahmen-Protokoll;
Routen des transcodierten Signalisierungs- und Verwaltungskommunikationsverkehrs, welcher an ein Verwaltungsnetzwerk gerichtet ist, an einen Verwaltungslink (3); und
Routen des transcodierten Signalisierungs- und Verwaltungskommunikationsverkehrs, welcher an das besagte Netzwerkelement (20) gerichtet ist, an eine Verarbeitungseinheit (31) des besagten Netzwerkelements (30).

2. Verfahren nach Anspruch 1,
**dadurch gekennzeichnet,**
**dass** das Verfahren weiterhin den folgenden Schritt umfasst:
Routen, anhand der besagten Ethernet-basierten Routing-Einheit (33), des transcodierten Signalisierungs- und Verwaltungskommunikationsverkehrs auf der Basis von einer oder mehreren in der Datennutzlast (305) enthaltenen IP-Adresse.

3. Verfahren nach Anspruch 1,
**dadurch gekennzeichnet,**
**dass** das Verfahren weiterhin den folgenden Schritt umfasst:
während der Transcodierung des empfangenen Signalisierungs- und
Verwaltungskommunikationsverkehrs, Zuweisen einer Kennung des eingebetteten Kommunikationskanals an einen VLAN-Tag (303) des Rahmens vom Typ Ethernet (300), wobei die Kennung des eingebetteten Kommunikationskanals einen eingebetteten Kommunikationskanal, mit welchem die in den Rahmen vom Typ Ethernet (300) eingefügte Datennutzlast (305) assoziiert ist, identifiziert.

4. Verfahren nach Anspruch 1,
**dadurch gekennzeichnet,**
**dass** das Verfahren weiterhin den folgenden Schritt umfasst:
Einfügen der gestrippten Datennutzlast (305) in die Ethernet-Rahmen (300) nach Entfernen der in die Datennutzlast (205) eingefügten HDLC-Leerbits gemäß dem Punkt-zu-Punkt-HDLC-Rahmen-Protokoll.

5. Netzwerkelement (30), vorzugsweise ein optischer Crossconnect, eines Übertragungssystems (5), wobei ein Signalisierungs- und Verwaltungskommunikationsverkehr zwischen Netzwerkelementen (30, 51, 52, 53) des Übertragungssystems (5) in eingebetteten Kommunikationskanälen anhand eines Punkt-zu-Punkt-HDLC-Rahmen-Protokolls übertragen wird, wobei das Netzwerkelement (30) umfasst:
Eine oder mehrere HDLC-Abschluss- und Ethernet-Transcodierungseinheiten (32), welche geeignet sind, einen Signalisierungs- und Verwaltungskommunikationsverkehr auf einem oder mehreren ersten eingebetteten Kommunikationskanälen zu empfangen und den empfangenen Signalisierungs- und Verwaltungskommunikationsverkehr durch Strippen einer Datennutzlast (205) aus Rahmen (200) gemäß einem Punkt-zu-Punkt-HDLC-Rahmen-Protokoll und Einfügen der gestrippten Datennutzlast (305) in Ethernet-Rahmen (300) zu transcodieren; und
eine oder mehrere Ethernet-basierte Routing-Einheiten (33), welche geeignet sind, den transcodierten Signalisierungs- und Verwaltungskommunikationsverkehr zu routen;
wobei, wenn die in dem transcodierten Signalisierungs- und Verwaltungskommunikationsverkehr enthaltenen Daten an einen oder mehrere zweite eingebettete Kommunikationskanäle gerichtet ist, das Netzwerkelement (30), vorzugsweise die Ethernet-basierte Routing-Einheit (33), geeignet ist, den transcodierten Signalisierungs- und Verwaltungskommunikationsverkehr an den einen oder die mehreren zweiten eingebetteten Kommunikationskanäle zu routen, und wobei das Netzwerkelement (30), vorzugsweise die HDLC-Abschluss- und Ethernet-Transcodierungseinheit (32), geeignet ist, den transcodierten Signalisierungs- und Verwaltungskommunikationsverkehr von dem Rahmen vom Typ Ethernet (300) in das Punkt-zu-Punkt-HDLC-Rahmen-Protokoll rückzutranscodieren, wobei das Netzwerkelement (30), vorzugsweise die Ethernet-basierte Routing-Einheit (33), geeignet ist, den transcodierten Signalisierungs- und Verwaltungskommunikationsverkehr, welcher an ein Verwaltungsnetzwerk gerichtet ist, an einen mit dem Verwaltungsnetzwerk assoziierten Verwaltungslink (3) zu routen, und
wobei das Netzwerkelement (30), vorzugsweise die Ethernet-basierte Routing-Einheit (33), geeignet ist, den transcodierten Signalisierungs- und Verwaltungskommunikationsverkehr, welcher an das besagte Netzwerkelement (30) gerichtet ist, an eine Verarbeitungseinheit (31) des besagten Netzwerkelements (30) zu routen.

6. Netzwerkelement nach Anspruch 5,
**dadurch gekennzeichnet,**
**dass** das Netzwerkelement (30) weiterhin eine Verarbeitungseinheit (31) umfasst, welche geeignet ist, den transcodierten Signalisierungs- und Verwaltungskommunikationsverkehr, welcher an das besagte Netzwerkelement (30) gerichtet ist, von der einen oder mehreren Ethernet-basierten Routing-Einheiten (33) zu empfangen und den transcodierten Signalisierungs- und Verwaltungskommunikationsverkehr zu verarbeiten.

7. Netzwerkelement nach Anspruch 5,
**dadurch gekennzeichnet,**
**dass** die eine oder die mehreren Ethernet-basierten Routing-Einheiten (33) einen oder mehrere IP-Router (331), welche geeignet sind, den transcodierten Signalisierungs- und Verwaltungskommunikationsverkehr auf der Basis von einer oder mehreren in der Datennutzlast (305) enthaltenen IP-Adressen zu routen, und einen oder mehrere Ethernet-Switches (332), welche geeignet sind, den transcodierten Signalisierungs- und Verwaltungskommunikationsverkehr mit der einen oder den mehreren HDLC-Abschluss- und Ethernet-Transcodierungseinheiten (32) auszutauschen, umfassen.

8. Netzwerkelement nach Anspruch 5,
**dadurch gekennzeichnet,**
**dass** die eine oder mehreren HDLC-Abschluss- und Ethemet-Transcodierungseinheit (32) geeignet sind, den Signalisierungs- und Verwaltungskommunikationsverkehr, der auf dem einen oder mehreren ersten eingebetteten Kommunikationskanälen auf einem Link (2) zwischen der einen oder mehreren HDLC-Abschluss- und Ethernet-Transcodierungseinheiten (32) und der einen oder mehreren Ethernet-basierten Routing-Einheiten (33) empfangen wird, zu multiplexen, und den Signalisierungs- und Verwaltungskommunikationsverkehr, welcher von der einen oder mehreren Ethernet-basierten Routing-Einheiten (33) empfangen wird, an einen oder mehrere zweite eingebettete Kommunikationskanäle zu demultiplexen.

9. Netzwerkelement nach Anspruch 5,
**dadurch gekennzeichnet,**
**dass** die eine oder mehreren HDLC-Abschluss- und Ethernet-Transcodierungseinheiten (32) in einer oder mehreren feldprogrammierbaren Gate-Anordnungen implementiert werden.

10. Netzwerkelement nach Anspruch 5,
**dadurch gekennzeichnet,**
**dass** die eine oder mehreren HDLC-Abschluss- und Ethernet-Transcodierungseinheiten (32) geeignet sind, den transcodierten Signalisierungs- und Verwaltungskommunikationsverkehr durch Strippen der Datennutzlast (305) von den Ethernet-Rahmen (300) und Einfügen der gestrippten Datennutzlast (205) in Rahmen (200) gemäß dem Punkt-zu-Punkt-HDLC-Rahmen-Protokoll rückzutranscodieren.

## Revendications

1. Procédé de gestion d'un trafic de communication de signalisation et de gestion dans un élément de réseau (30), en particulier un répartiteur optique, d'un système de transmission (5), dans lequel le trafic de communication de signalisation et de gestion est transmis entre des éléments de réseau (30, 51, 52, 53) du système de transmission (5) dans des canaux de communication incorporés au moyen d'un protocole point à point à trames HDLC, le procédé comprenant les étapes suivantes :
réception, sur ledit élément de réseau (30), du trafic de communication de signalisation et de gestion sur un ou plusieurs premiers canaux de communication incorporés via une ou plusieurs interfaces de canal de communication incorporées (32)
transcodage du trafic de communication de signalisation et de gestion reçu par enlèvement d'une charge utile de données (205) de trames (200) conformément à un protocole point à point à trames HDLC et insertion de la charge utile de données enlevée (305) dans des trames Ethernet (300) ;
acheminement du trafic de communication de signalisation et de gestion transcodé au moyen d'une unité d'acheminement Ethernet (33) ;
si les données contenues dans le trafic de communication de signalisation et de gestion transcodé sont destinées à un ou plusieurs deuxièmes canaux de communication incorporés, acheminement du trafic de communication de signalisation et de gestion transcodé vers les uns ou plusieurs deuxièmes canaux de communication incorporés et transcodage du trafic de communication de signalisation et de gestion transcodé de la trame de type Ethernet (300) de nouveau vers le protocole point à point à trames HDLC ;
acheminement du trafic de communication de signalisation et de gestion transcodé qui est destiné à un réseau de gestion vers une liaison de gestion (3) ; et
acheminement du trafic de communication de signalisation et de gestion transcodé qui est destiné audit élément de réseau (20) vers une unité de traitement (31) dudit élément de réseau (30).

2. Procédé selon la revendication 1,
**caractérisé en ce que**
le procédé comprend en outre l'étape suivante :
acheminement, au moyen de ladite unité d'acheminement Ethernet (33), du trafic de communication de signalisation et de gestion transcodé sur la base d'une ou de plusieurs adresses IP contenues dans la charge utile de données (305).

3. Procédé selon la revendication 1,
**caractérisé en ce que**
le procédé comprend en outre l'étape suivante :
lors du transcodage du trafic de communication de signalisation et de gestion reçu, assignation d'un identifiant de canal de communication incorporé à une étiquette VLAN (303) de la trame de type Ethernet (300), dans lequel l'identifiant de canal de communication incorporé identifie un canal de communication incorporé auquel est associée la charge utile de données (305) insérée dans la trame de type Ethernet (300).

4. Procédé selon la revendication 1,
**caractérisé en ce que**
le procédé comprend en outre l'étape suivante :
insertion de la charge utile de données enlevée (305) dans les trames Ethernet (300) après le retrait des bits de zéro HDLC insérés dans la charge utile de données (205) conformément au protocole point à point à trames HDLC.

5. Élément de réseau (30), de préférence un répartiteur optique, d'un système de transmission (5), dans lequel un trafic de communication de signalisation et de gestion est transmis entre des éléments de réseau (30, 51, 52, 53) du système de transmission (5) dans des canaux de communication incorporés au moyen d'un protocole point à point à trames HDLC, l'élément de réseau (30) comprenant :
une ou plusieurs unités de terminaison HDLC et de transcodage Ethernet (32) adaptées pour recevoir le trafic de communication de signalisation et de gestion sur un ou plusieurs premiers canaux de communication incorporés et transcoder le trafic de communication de signalisation et de gestion reçu en enlevant une charge utile de données (205) de trames (200) conformément à un protocole point à point à trames HDLC et en insérant la charge utile de données enlevée (305) dans des trames Ethernet (300), et
une ou plusieurs unités d'acheminement Ethernet (33) adaptées pour acheminer le trafic de communication de signalisation et de gestion transcodé, dans lequel, si les données contenues dans le trafic de communication de signalisation et de gestion transcodé sont destinées à un ou plusieurs deuxièmes canaux de communication incorporés, l'élément de réseau (30), de préférence l'unité d'acheminement Ethernet (33), est adapté pour acheminer le trafic de communication de signalisation et de gestion transcodé vers les un ou plusieurs deuxièmes canaux de communication incorporés et l'élément de réseau (30), de préférence l'unité de terminaison HDLC et de transcodage Ethernet (32), est adapté pour transcoder le trafic de communication de signalisation et de gestion transcodé de la trame de type Ethernet (300) de nouveau vers le protocole point à point à trames HDLC, dans lequel l'élément de réseau (30), de préférence l'unité d'acheminement Ethernet (33), est adapté pour acheminer le trafic de communication de signalisation et de gestion transcodé qui est destiné à un réseau de gestion vers une liaison de gestion (3) associée au réseau de gestion, et
dans lequel l'élément de réseau (30), de préférence l'unité d'acheminement Ethernet (33), est adapté pour acheminer le trafic de communication de signalisation et de gestion transcodé qui est destiné audit élément de réseau (30) vers une unité de traitement (31) dudit élément de réseau (30).

6. Élément de réseau selon la revendication 5,
**caractérisé en ce que**
l'élément de réseau (30) comprend en outre une unité de traitement (31) adaptée pour recevoir le trafic de communication de signalisation et de gestion transcodé qui est destiné audit élément de réseau (30) depuis la ou les unités d'acheminement Ethernet (33) et traiter le trafic de communication de signalisation et de gestion transcodé reçu.

7. Élément de réseau selon la revendication 5,
**caractérisé en ce que**
la ou les unités d'acheminement Ethernet (33) comprennent un ou plusieurs routeurs IP (331) adaptés pour acheminer le trafic de communication de signalisation et de gestion transcodé sur la base d'une ou de plusieurs adresses IP contenues dans la charge utile de données (305) et un ou plusieurs commutateurs Ethernet (332) adaptés pour échanger le trafic de communication de signalisation et de gestion transcodé avec la ou les unités de terminaison HDLC et de transcodage Ethernet (32).

8. Élément de réseau selon la revendication 5,
**caractérisé en ce que**
la ou les unités de terminaison HDLC et de transcodage Ethernet (32) sont adaptées pour multiplexer le trafic de communication de signalisation et de gestion reçu sur le ou les premiers canaux de communication incorporés sur une liaison (2) entre la ou les unités de terminaison HDLC et de transcodage Ethernet (32) et la ou les unités d'acheminement Ethernet (33) et démultiplexer le trafic de communication de signalisation et de gestion reçu depuis la ou les unités d'acheminement Ethernet (33) pour le ou les deuxièmes canaux de communication incorporés.

9. Élément de réseau selon la revendication 5,
**caractérisé en ce que**
la ou les unités de terminaison HDLC et de transcodage Ethernet (32) sont mises en oeuvre dans un ou plusieurs réseaux prédiffusés programmables par l'utilisateur.

10. Élément de réseau selon la revendication 5,
**caractérisé en ce que**
la ou les unités de terminaison HDLC et de transcodage Ethernet (32) sont adaptées pour transcoder de nouveau le trafic de communication de signalisation et de gestion transcodé en enlevant la charge utile de données (305) des trames Ethernet (300) et en insérant la charge utile de données enlevée (205) dans les trames (200) conformément au protocole point à point à trames HDLC.
